# EUROPÄISCHE PATENTANMELDUNG

(11) **EP 4 810 226 A1**
(43) Veröffentlichungstag der Anmeldung: **23.09.2026**
(21) Anmeldenummer: 26164063.5
(22) Anmeldetag: 11.03.2026
(51) Int. Cl.: B29C 48/88, B29C 48/00, B29C 48/08, B29C 48/27, B29C 48/92, B29C 55/12, B29C 48/255

(54) **CASTING-UNIT, ANLAGE ZUM HERSTELLEN EINER FOLIE SOWIE VERFAHREN ZUM HERSTELLEN EINER FOLIE**

(30) Priorität: 18.03.2025 DE 102025110463
(71) Anmelder: Brückner Maschinenbau GmbH, 83313 Siegsdorf (DE)
(72) Erfinder: MAURER, Peter, 83101 Rohrdorf (DE); EDFELDER, Anton, 83246 Unterwössen (DE); THALHAMMER, Matthias, 83233 Bergen (DE); GIAPOULIS, Anthimos, 83278 Traunstein (DE)
(74) Vertreter: Flach Bauer & Partner Patentanwälte mbB

(57) **Zusammenfassung**

Eine Casting-Unit (14) für eine Anlage (10) zum Herstellen einer Folie (F) hat eine Breitschlitzdüse (26), eine Kühlwalze (28) und eine Luftdüsenvorrichtung (32). Die Kühlwalze (28) weist eine Mantelfläche (36) auf und ist dazu ausgebildet, um eine Achse zu rotieren, sodass sich die Mantelfläche (36) in einer Rotationsrichtung (R) bewegt, wobei die Breitschlitzdüse (26) dazu ausgebildet ist, eine Schmelze (38) zu erzeugen. Die Luftdüsenvorrichtung (32) ist mit der Breitschlitzdüse (26) verbunden, sodass durch die Mantelfläche (36) der Kühlwalze (28), die Schmelze (38), die Breitschlitzdüse (26) und die Luftdüsenvorrichtung (32) ein Zwischenraum (48) begrenzt ist, wobei die Luftdüsenvorrichtung (32) dazu ausgebildet ist, einen Luftstrom (46) zu erzeugen, der entgegen der Rotationsrichtung (R) entlang einer Wirklinie (W) auf die Mantelfläche (36) trifft und einen Unterdruck im Zwischenraum (48) erzeugt.

Ferner werden eine Anlage (10) sowie ein Verfahren zur Herstellung einer Folie (F) bereitgestellt.

## Beschreibung

Die Erfindung betrifft eine Casting-Unit, eine Anlage zum Herstellen einer Folie sowie ein Verfahren zum Herstellen einer Folie.

Beim Herstellen von dünnen Kunststofffolien wird zunächst eine Folie einer Kunststoffschmelze auf eine Kühlwalze aufgebracht, auf der sie abkühlt und erstarrt. Hierbei können zwischen der Kunststoffschmelze und der Kühlwalze Luftblasen eingeschlossen werden, die Teil der Folie werden und dadurch die Qualität der Folie beeinträchtigen.

Um solche Lufteinschlüsse zwischen der Kunststoffschmelze und der Kühlwalze zu vermeiden, ist es bekannt, entgegen der Rotationsrichtung vor dem Aufbringen der Schmelze eine Haube anzuordnen, die sich bis unter die Breitschlitzdüse erstreckt. Aus dieser Haube wird dann Luft abgesaugt, um ein Vakuum zu erzeugen, wodurch Lufteinschlüsse verringert werden sollen. Die US 5 618 568 A zeigt beispielsweise eine solche Lösung.

Problematisch bei diesen Lösungen ist, dass diese, um einen nennenswerten Effekt zu erzielen, sehr nah an der Kühlwalze positioniert sein müssen, um ein genügend großes Vakuum erzeugen zu können. Dies macht die Einstellung der Anlage schwierig und zeitaufwendig, wodurch der wirtschaftliche Nutzen sinkt.

Es ist daher Aufgabe der Erfindung, eine Casting-Unit, eine Anlage sowie ein Verfahren zur Herstellung von Folie bereitzustellen, bei denen Lufteinschlüsse zwischen der Kunststoffschmelze und der Kühlwalze auf einfache Weise verringert werden.

Die Aufgabe wird gelöst durch eine Casting-Unit für eine Anlage zum Herstellen einer Folie, mit einer Breitschlitzdüse, einer Kühlwalze und einer Luftdüsenvorrichtung. Die Kühlwalze weist eine Mantelfläche auf und ist dazu ausgebildet, um eine Achse zu rotieren, sodass sich die Mantelfläche in einer Rotationsrichtung bewegt. Die Breitschlitzdüse ist dazu ausgebildet, eine Schmelze zu erzeugen, die an einer Anlegelinie auf die Mantelfläche trifft. Die Luftdüsenvorrichtung ist mit der Breitschlitzdüse verbunden, sodass durch die Mantelfläche der Kühlwalze, die Schmelze, die Breitschlitzdüse und die Luftdüsenvorrichtung ein Zwischenraum begrenzt ist, wobei die Luftdüsenvorrichtung dazu ausgebildet ist, einen Luftstrom zu erzeugen, der entgegen der Rotationsrichtung entlang einer Wirklinie auf die Mantelfläche trifft und einen Unterdruck im Zwischenraum erzeugt.

Dadurch, dass der Unterdruck durch den Luftstrom erzeugt wird, der auf die Mantelfläche der Kühlwalze trifft, ist der Zwischenraum entlang der Breite dicht verschlossen, wodurch der Unterdruck einfach ausgebildet werden kann. Zudem sind genaue Positionierungen großer Komponenten, wie einer Haube, nicht notwendig.

Insbesondere liegt der Unterdruck im Bereich unterhalb der Schmelze und/oder im Abschnitt des Zwischenraums von der Nulllinie in Rotationsrichtung vor.

Weiterhin wird durch den Luftstrom, der auf die Mantelfläche trifft, eine Grenzschicht an Luft, die sich mit der Mantelfläche mitbewegt, von der Mantelfläche abgelöst. Auf diese Weise können Lufteinschlüsse in der Schmelze weiter verringert werden.

Im Rahmen dieser Offenbarung entspricht die Rotationsrichtung einer Richtung in Umfangsrichtung, die durch die Umfangsrichtung der Kühlwalze definiert ist. Ebenso kann eine Axialrichtung durch die Axialrichtung der Kühlwalze definiert sein.

Insbesondere erstrecken sich die Anlegelinie und die Wirklinie in Axialrichtung.

Der Luftstrom kann ebenfalls eine Begrenzung des Zwischenraums darstellen. Der Luftstrom fördert insbesondere Luft aus dem Zwischenraum hinaus.

Die Casting-Unit kann eine Anlegevorrichtung aufweisen, die dazu ausgebildet ist, die Schmelze besonders gleichmäßig und zuverlässig auf die Kühlwalze aufzubringen. Die Anlegevorrichtung kann eine sogenannte Pinning-Vorrichtung sein, beispielsweise eine elektrostatische Anlegevorrichtung ("E-Pinning-Vorrichtung"). Solche Anlegevorrichtungen sind zum Beispiel aus der DE 10 2022 118 971 A1 bekannt. Es können auch andere Pinning-Vorrichtungen zum Einsatz kommen.

In einer Ausgestaltung weist die Breitschlitzdüse eine Austrittsöffnung auf, die in Rotationsrichtung und/oder in Radialrichtung zur Mantelfläche hin geöffnet ist, wodurch die Schmelze besonders kontrolliert auf die Kühlwalze aufgebracht wird.

Die Richtung der Öffnung, d.h. die Richtung der Normalen der Öffnung, hat zum Beispiel eine Komponente in Rotationsrichtung und eine Komponente in Radialrichtung zur Mantelfläche hin.

Die Austrittsöffnung kann in Rotationsrichtung versetzt zur Nulllinie sein.

In einer Ausführungsform weist die Austrittsöffnung und/oder die Schmelze eine Breite in Axialrichtung auf und die Breite des Zwischenraums, des Luftstroms und/oder der Luftdüsenvorrichtung in Axialrichtung ist kleiner, gleich oder größer als die Breite der Austrittsöffnung und/oder der Schmelze. Auf diese Weise ist sichergestellt, dass Lufteinschlüsse über die gesamte Breite der Schmelze vermieden werden.

Die Breite der Kühlwalze entspricht oder ist größer als die Breite der Luftdüsenvorrichtung, des Luftstroms und/oder der Schmelze.

Um Unregelmäßigkeiten in der Folie zu vermeiden, können die Austrittsöffnung, die Schmelze, der Zwischenraum und/oder der Luftstrom in Axialrichtung ununterbrochen sein.

In einer Ausgestaltung weist die Luftdüsenvorrichtung einen Strömungsleitabschnitt auf, der einen Spalt zwischen der Kühlwalze und der Luftdüsenvorrichtung definiert, wobei der Luftstrom durch den Spalt verläuft, insbesondere wobei der Spalt zwischen 0 mm und 6 mm, insbesondere zwischen 1,5 mm und 3,5 mm groß ist. Durch die Größe des Spaltes kann der Unterdruck im Zwischenraum eingestellt werden.

Der Unterdruck im Zwischenraum kann auch durch die Höhe des Überdrucks, der von der Druckluftquelle bereitgestellt wird, eingestellt werden.

Der Strömungsleitabschnitt ist beispielsweise keilförmig, abgerundet und/oder konvex mit einer Spitze zur Kühlwalze hin. Der Strömungsleitabschnitt kann aus Polyetheretherketon (PEEK) hergestellt sein.

Die Wirklinie liegt insbesondere im Spalt, in Bezug auf die Rotationsrichtung vor dem Spalt oder in Bezug auf die Rotationsrichtung hinter dem Spalt.

In einer Ausführungsform hat der Luftstrom an der Wirklinie und/oder im Spalt eine Geschwindigkeit zwischen 50 m/s und 250 m/s, insbesondere zwischen 50 m/s und 200 m/s, und/oder der Unterdruck ist im Zwischenraum zwischen 500 Pa und 25.000 Pa, insbesondere zwischen 5 Pa und 25.000 Pa, beispielsweise zwischen 5 Pa und 600 Pa, insbesondere zwischen 30 Pa und 150 Pa, oder zwischen 500 Pa und 20.000 Pa, wodurch Lufteinschlüsse weiter reduziert werden können.

Die Druckangaben des Unterdrucks sind als Druckdifferenz zum Umgebungsdruck zu verstehen.

Für eine besonders hohe Qualität der hergestellten Folie kann die Anlegelinie in Rotationsrichtung versetzt und/oder die Wirklinie entgegen der Rotationsrichtung versetzt zu einer Nulllinie liegen, insbesondere wobei die Nulllinie einer radial verlaufenden Gerade durch den Scheitelpunkt der Kühlwalze in ordnungsgemäß montierter Position entspricht.

Der Scheitelpunkt wird auch 12-Uhr-Position genannt.

Der Abstand der Nulllinie zur Schmelze und/oder zur Anlegelinie kann zwischen 30 mm und 100 mm betragen, und der Abstand zwischen der Nulllinie und dem Luftstrom und/oder der Wirklinie kann zwischen 30 mm und 145 mm betragen, jeweils gemessen entlang der Tangentialen an der Nulllinie.

Um die Grenzschicht besonders wirkungsvoll von der Kühlwalze abzulösen, kann der Luftstrom in einem Auftreffwinkel auf die Mantelfläche treffen, der zwischen 0° und 80°, insbesondere zwischen 5° und 40° groß ist.

Unter dem Auftreffwinkel wird im Rahmen dieser Offenbarung der Winkel zwischen dem Luftstrom und der Tangente an der Wirklinie verstanden.

Der Auftreffwinkel ist insbesondere konstant entlang der Breite des Luftstroms.

Für eine platzsparende Integration kann die Luftdüsenvorrichtung an der Breitschlitzdüse befestigt sein, insbesondere an der der Kühlwalze zugewandten Seite der Breitschlitzdüse.

Die Luftdüsenvorrichtung kann relativ zur Breitschlitzdüse bewegbar ausgebildet sein, um die Position des Luftstroms und/oder des Spalts an die Gegebenheiten, z.B. das Material der herzustellenden Folie, anpassen zu können.

In einer Ausführungsform weist die Luftdüsenvorrichtung einen Düsenabschnitt mit einer Düsenöffnung auf, die zur Wirklinie, zum Spalt und/oder zum Strömungsleitabschnitt hin geöffnet ist, insbesondere wobei die Luftdüsenvorrichtung wenigstens eine Druckluftquelle aufweist, die dazu ausgebildet ist, Luft zur Düsenöffnung zu fördern, um den Luftstrom zu erzeugen. Auf diese Weise kann der Luftstrom, der aus der Düsenöffnung austritt, kontrolliert erzeugt werden.

Die Druckluftquelle kann stirnseitig an der Luftdüsenvorrichtung angeordnet sein. Es ist denkbar, dass zwei Druckluftquellenvorgesehen sind, die beispielsweise an gegenüberliegenden Stirnseiten der Luftdüsenvorrichtung angeordnet sind.

Die Druckluftquelle ist beispielsweise wenigstens ein Rohr- und/oder Schlauch, beispielsweise ein Rohr- und/oder Schlauchsystem. Dieses kann zum Beispiel durch einen Kompressor, der Teil der Druckluftquelle sein kann, mit Druckluft gespeist werden. Der Kompressor kann sich in einem von der Anlage getrennten Raum befinden.

In einem Aspekt weist die Luftdüsenvorrichtung einen Stauraum auf, von dem aus sich die Düsenöffnung erstreckt. Durch den Stauraum wird ein in Axialrichtung gleichmäßiger Druck und somit ein homogener Luftstrom erzeugt.

Insbesondere sind die Düsenöffnung und/oder der Stauraum gleich breit oder breiter als Breite der Schmelze. Die Düsenöffnung und/oder der Stauraum sind beispielsweise entlang der gesamten Breite durchgängig.

Um den Druck im Stauraum in Axialrichtung konstant zu halten, kann die Luftdüsenvorrichtung, insbesondere der Düsenabschnitt, eine Einlasskammer und mehrere Kanäle aufweisen, wobei die Kanäle die Einlasskammer fluidisch mit dem Stauraum verbinden, insbesondere wobei die wenigstens eine Druckluftquelle an einer Stirnseite der Einlasskammer angeordnet ist.

Die Einlasskammer ist insbesondere entlang ihrer Breite durchgängig. Die Breite der Einlasskammer kann der Breite des Stauraums entsprechen.

In einer Ausgestaltung weist die Casting-Unit eine Steuerung auf, und die Luftdüsenvorrichtung weist wenigstens eine Druckluftquelle mit einem Druckregelventil auf. Die Steuerung ist mit dem Druckregelventil derart verbunden und dazu eingerichtet, um das Druckregelventil anzusteuern. Auf diese Weise kann der Unterdruck im Zwischenraum automatisiert präzise eingestellt werden, insbesondere um zu verhindern, dass die Schmelze vor dem Auftreffen auf die Kühlwalze flattert.

Beispielsweise ist die Steuerung dazu eingerichtet, als Eingangsgröße die Geschwindigkeit der Kühlwalze zu empfangen und auf Basis wenigstens der Geschwindigkeit der Kühlwalze ein Steuerungssignal für das Druckregelventil an das Druckregelventil auszugeben.

Insbesondere beeinflusst das Druckregelventil die Höhe des Überdrucks in der Einlasskammer und damit der Druck des Luftstroms und des Unterdrucks im Zwischenraum.

Denkbar ist auch, dass die Höhe des Überdrucks in der Einlasskammer und/oder der Eingangsdruck manuell eingestellt wird. Beispielsweise ist das Druckregelventil ein manuell betätigbares Ventil.

Zur Vergrößerung des Unterdrucks im Zwischenraum kann die Luftdüsenvorrichtung zwei stirnseitige Abdeckungen aufweisen, die jeweils an einer der Stirnseiten des Zwischenraums angeordnet sind und den Zwischenraum in Axialrichtung verschließen, insbesondere wobei wenigstens eine der Abdeckungen einen Drucksensor und/oder eine Messöffnung aufweist, die fluidisch mit einem Drucksensor verbunden ist.

Die Abdeckungen sind beispielsweise unabhängig vom Düsenabschnitt der Luftdüsenvorrichtung in Umfangsrichtung und in Radialrichtung bewegbar.

Ferner wird die Aufgabe gelöst durch eine Anlage zum Herstellen einer Folie, mit einer Casting-Unit wie zuvor beschrieben und einer Reckanlage, insbesondere einer Quer-, Längs- und/oder Simultan-Reckanlage.

Die zur Casting-Unit beschriebenen Merkmale und Vorteile gelten gleichermaßen für die Anlage und umgekehrt.

Die Aufgabe wird ferner gelöst durch ein Verfahren zum Herstellen einer Folie mittels einer Anlage wie zuvor beschrieben, wobei eine Schmelze mittels der Breitschlitzdüse erzeugt und auf der Kühlwalze abgelegt wird, wobei gleichzeitig ein Unterdruck im Zwischenraum erzeugt wird.

Die zur Casting-Unit und/oder Anlage beschriebenen Merkmale und Vorteile gelten gleichermaßen für das Verfahren und umgekehrt.

Beispielsweise wird die Höhe des Unterdrucks im Zwischenraum durch eine Steuerung der Casting-Unit gesteuert oder geregelt wird, insbesondere auf Basis wenigstens der Geschwindigkeit der Kühlwalze.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Fig. 1: eine schematische Ansicht einer Anlage gemäß einer Ausführungsform der Erfindung mit einer Casting-Unit gemäß einer Ausführungsform der Erfindung,
- Fig. 2: die Casting-Unit gemäß Figur 1 in einer schematischen perspektivischen Darstellung,
- Fig. 3: eine Prinzipdarstellung der Casting-Unit gemäß Figur 2 im Schnitt,
- Fig. 4: ein Ablaufdiagramm einer Ausführungsform eines erfindungsgemäßen Verfahrens,
- Fig. 5: eine detailliertere Seitenansicht einer Casting-Unit einer Ausführungsform der Erfindung,
- Fig. 6: eine Schnittansicht der Luftdüsenvorrichtung der Anlegevorrichtung gemäß Figur 5,
- Fig. 7: eine Unteransicht eines Abschnitts der Anlegevorrichtung gemäß Figur 5,
- Fig. 8: eine vergrößerte Schnittansicht der Luftdüsenvorrichtung der Anlegevorrichtung gemäß Figur 5 im Bereich des Luftstroms,
- Fig. 9: eine Darstellung des Luftdrucks im Zwischenraum, und
- Fig. 10: einen Graph mit zwei beispielshaften Funktionen einer Abhängigkeit des Soll-Wert des Eingangsdrucks von der Geschwindigkeit der Kühlwalze.

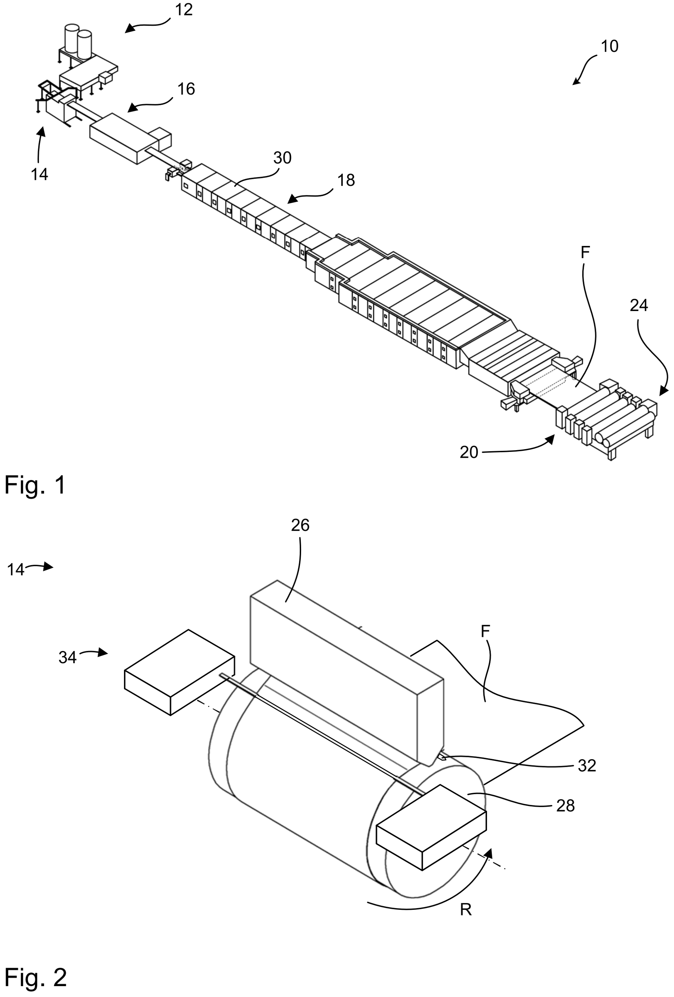

In Figur 1 ist äußerst schematisch eine Anlage 10 zur Herstellung einer Folie F dargestellt, die mehrere verschiedene Anlagen und Vorrichtungen umfasst.

Die Anlage 10 ist beispielsweise eine sequentielle Folienherstellungsanlage anhand der - ohne Beschränkung des Schutzbereichs - die Erfindung beispielhaft erläutert wird.

Im gezeigten Beispiel weist die Anlage 10 eine Extrusionsanlage 12, eine Casting-Unit 14, zumindest eine Längsreckanlage 16 (MDO, "Machine Direction Orienter"), eine Querreckanlage 18 (TDO, "Transverse Direction Orienter"), eine Behandlungsvorrichtung 20 sowie eine Wickelvorrichtung 24 auf.

Die Extrusionsanlage 12 weist einen Extruder auf und ist dazu eingerichtet, aus wenigstens einem Ausgangsprodukt eine Schmelze zu erzeugen. Die Schmelze ist eine Kunststoffschmelze.

Beispielsweise ist der Extruder oder sind die Extruder ein Einschneckenextruder, Kaskadenextruder und/oder Doppelschneckenextruder.

Denkbar ist auch, dass andere Misch- und Aufbereitungsaggregate, wie ein Buskneter oder ein Planetwalzenextruder, verwendet werden.

Ebenso ist es möglich, die Schmelze mittels Polymerisation zu erzeugen. Hierzu werden die Monomere (und optional Zusatzstoffe, wie Katalysatoren) in einem Reaktor und/oder einem Extruder der Extrusionsanlage 12 vermischt und polymerisiert.

Die Schmelze kann direkt über eine Breitschlitzdüse 26 der Casting-Unit 14 auf eine Kühlwalze 28 der Casting-Unit 14 aufgetragen werden, wodurch die Folie F erzeugt wird.

Die Kühlwalze 28 hat beispielsweise einen Durchmesser zwischen 50 cm und 4 m.

Die erzeugte Folie F kann eine oder mehrere Lagen aufweisen. Denkbar ist bei einer mehrlagigen Folie, dass ein Extruder mehrere oder alle Lagen erzeugt, oder dass für jede Lage ein Extruder vorgesehen ist.

Anschließend wird die Folie F der Längsreckanlage 16 zugeführt und dort in Längsrichtung gereckt.

Die Querreckanlage 18, wie sie beispielsweise in der DE 10 2021 128 332 A1 beschrieben ist, hat entlang der üblichen Bewegungs- bzw. Abzugsrichtung der Anlage 10 einen Ofen 30 mit verschiedenen Zonen zur Temperierung der Folie F.

Im Ofen 30 wird die Folie F in an sich bekannter Weise erwärmt und durch die Querreckanlage 18 in Querrichtung gereckt, wodurch eine mono- oder, wie im Ausführungsbeispiel, biaxial orientierte Folie hergestellt wird.

Die optionale Behandlungsvorrichtung 20 ist beispielsweise eine Vorrichtung zur Aktivierung der Oberfläche der Folie F durch eine Coronabehandlung, beispielsweise um eine bessere Metallhaftung zu realisieren. Die Coronabehandlung kann einseitig oder beidseitig erfolgen.

Die Wickelvorrichtung 24 dient zum Aufwickeln der erzeugten Folie F und ist die in Abzugsrichtung letzte Vorrichtung. Sie weist eine Wickelhülse auf, auf der die Folie F aufgewickelt wird.

In Figur 2 ist die Casting-Unit 14 (auch Kühlwalzeneinheit genannt) in einer vergrößerten schematischen Ansicht dargestellt.

Die hier gezeigte Casting-Unit 12 umfasst die Breitschlitzdüse 26, die Kühlwalze 28 sowie eine Luftdüsenvorrichtung 32 und eine optionale Anlegevorrichtung 34.

Die Anlegevorrichtung 34 kann eine sogenannte Pinning-Vorrichtung sein, beispielsweise eine elektrostatische Anlegevorrichtung ("E-Pinning-Vorrichtung"). Solche Anlegevorrichtungen sind zum Beispiel aus der DE 10 2022 118 971 A1 bekannt. Es können auch andere Anlegevorrichtungen 34 zum Einsatz kommen. Die Anlegevorrichtung 34 ist in den übrigen Figuren aus Gründen der Übersichtlichkeit nicht dargestellt.

Die Kühlwalze 28 ist gekühlt und wird daher auch "Chill Roll" genannt. Sie hat eine Achse, die sich in die Zeichenebene hinein erstreckt und eine Axialrichtung definiert, einen Außenumfang, der eine Umfangsrichtung definiert, und einen Radius, der eine Radialrichtung definiert.

Die Kühlwalze 28 hat eine Mantelfläche 36 über ihren Umfang, und ist dazu ausgebildet, um die Achse zu rotieren, wodurch sich die Mantelfläche 36 in Umfangsrichtung in eine Rotationsrichtung R bewegt.

Hierzu kann ein Motor vorgesehen sein.

Die Breitschlitzdüse 26 ist oberhalb der Kühlwalze 28 angeordnet und dazu ausgebildet, die Schmelze 38, die die Folie F bildet, kontinuierlich auf die Kühlwalze 28 aufzutragen. Der Kunststoff der Schmelze 38 ist insbesondere ein Polyethylenterephthalat (PET). Die Verwendung von anderen Kunststoffen ist ebenso denkbar.

Die Kühlwalze 28 hat in Axialrichtung eine Breite, die größer ist als die Breite der Schmelze 38.

Die Breitschlitzdüse 26 und die Luftdüsenvorrichtung 32 haben ebenfalls eine Breite, die kleiner, gleich breit oder breiter ist als die Schmelze 38, jedoch geringer als die Breite oder gleich der Breite der Kühlwalze 28.

Insbesondere ist die Schmelze 38 in Axialrichtung, d.h. entlang ihrer Breite, ununterbrochen, sodass eine ununterbrochene Folie F erzeugt wird.

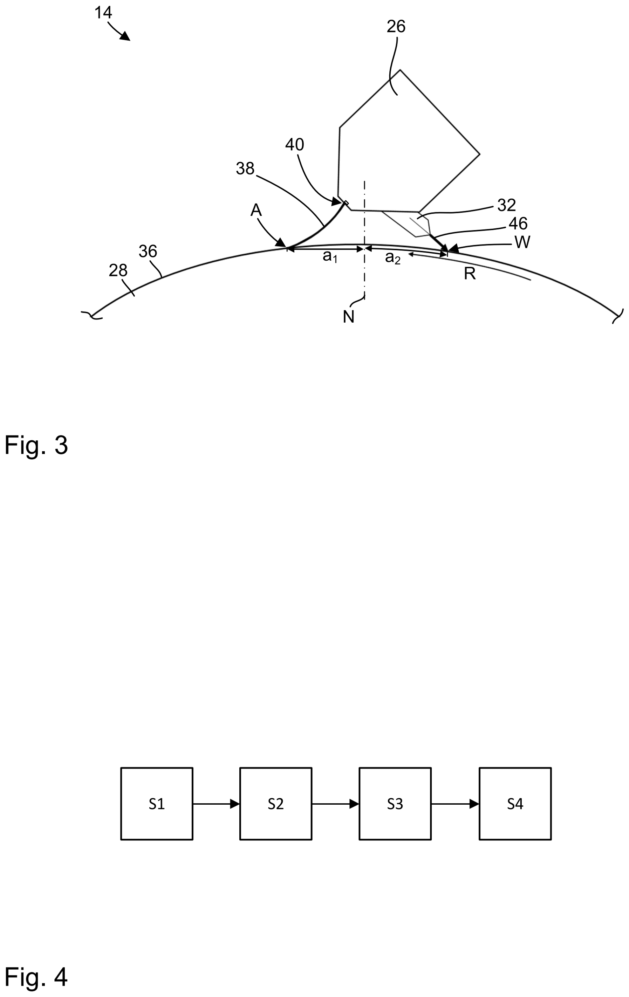

In Figur 3 ist eine Schnittansicht durch Figur 2 dargestellt, die ebenfalls wie Figur 2 stark vereinfacht ist, um das Prinzip zu erläutern.

Die Breitschlitzdüse 26 ist oberhalb der Kühlwalze 28 angeordnet, beispielsweise oberhalb des oberen Scheitelpunkts der Kühlwalze 28. Eine Nulllinie N der Kühlwalze 28, d.h. eine Gerade, die radial durch den oberen Scheitelpunkt der Kühlwalze 28 verläuft, schneidet somit die Breitschlitzdüse 26.

Die Breitschlitzdüse 26 ist radial beabstandet zur Mantelfläche 36 der Kühlwalze 28 angeordnet und hat eine Austrittsöffnung 40, aus der im Betrieb die Schmelze 38 austritt.

Die Austrittsöffnung 40 ist in Rotationsrichtung R versetzt zur Nulllinie N angeordnet und beispielsweise, wie im Ausführungsbeispiel gezeigt, in Rotationsrichtung R und in Radialrichtung zur Mantelfläche 36 hin geöffnet.

Die Richtung der Austrittsöffnung 40 entspricht dabei der Richtung der Normalen auf die Öffnung. Wie in Figur 3 zu sehen, hat diese Normale eine Komponente in Rotationsrichtung R und eine Komponente in Radialrichtung zur Mantelfläche 36 hin.

Denkbar ist auch, dass die Austrittsöffnung 40 ausschließlich zur Mantelfläche 36 hin geöffnet ist.

In Axialrichtung ist die Austrittsöffnung 40 ununterbrochen, und ihre Breite entspricht der Breite der Schmelze 38.

Während des Betriebs tritt, wie in Figur 3 dargestellt, die Schmelze 38 aus der Austrittsöffnung 40 aus und legt sich auf die Kühlwalze 28.

Die Linie in Axialrichtung, auf der die Schmelze 38 auf die Kühlwalze 28 trifft, wird als Anlegelinie A bezeichnet. Die Anlegelinie A ist in Rotationsrichtung R von der Austrittsöffnung 40 versetzt, wobei der Versatz mit steigender Rotationsgeschwindigkeit v der Kühlwalze 28 steigt.

Die Anlegelinie A bzw. die Schmelze 38 hat einen Abstand a₁ zur Nulllinie N. Dieser kann zwischen 30 mm und 100 mm betragen. Beispielsweise wird dieser Abstand a₁ entlang einer Tangente der Mantelfläche 36 am Schnittpunkt mit der Nulllinie N bestimmt. Entsprechend liegt die Anlegelinie A nicht exakt auf dieser Tangente, jedoch lediglich leicht versetzt hierzu, da der Durchmesser der Kühlwalze 28 im Vergleich zum Abstand a₁ sehr groß ist.

Die Luftdüsenvorrichtung 32 ist mit der Breitschlitzdüse 26 verbunden. Beispielsweise, wie im gezeigten Ausführungsbeispiel, ist die Luftdüsenvorrichtung 32 an der der Kühlwalze 28 zugewandten Seite der Breitschlitzdüse 26 an der Breitschlitzdüse 26 befestigt.

Die gesamte Luftdüsenvorrichtung 32 oder der Düsenabschnitt 42 kann relativ zur Breitschlitzdüse 26 bewegbar ausgebildet sein, insbesondere in Radialrichtung und Rotationsrichtung R.

Die Luftdüsenvorrichtung 32 hat einen Düsenabschnitt 42, der in Figur 3 zu sehen ist, und der eine Düsenöffnung 44 aufweist.

Die Düsenöffnung 44 dient zur Erzeugung eines Luftstroms 46, wie detailliert beschrieben werden wird.

Die Düsenöffnung 44 und der Luftstrom 46 sind in Axialrichtung, d.h. entlang der Breite, ununterbrochen ausgebildet. Zudem kann die Breite des Luftstroms 46 und/oder der Düsenöffnung 44 schmaler, gleich breit oder breiter als die Schmelze 38 sein.

Die Düsenöffnung 44 ist entgegen der Rotationsrichtung R geöffnet und hat zudem eine Komponente in Radialrichtung nach innen zur Mantelfläche 36 hin. Der erzeugte Luftstrom 46 verläuft entgegen der Rotationsrichtung R und auf die Mantelfläche 36 zu und trifft auf die Mantelfläche 36 entlang einer Wirklinie W. Die Wirklinie W erstreckt sich entsprechend in Axialrichtung.

Von der Nulllinie N ausgehend ist die Wirklinie W bzw. der Luftstrom 46 um einen Abstand a₂ entgegen der Rotationsrichtung R versetzt. Der Abstand a₂ beträgt beispielsweise zwischen 30 mm und 145 mm. Auch hier ist die Wirklinie nicht exakt auf der Tangente.

Die Luftdüsenvorrichtung 32 ist von der Mantelfläche 36 ebenfalls radial beabstandet.

Wie in Figur 3 zu erkennen ist, wird im Betrieb ein Zwischenraum 48 gebildet, der nach unten hin, also radial nach innen, durch die Mantelfläche 36 der Kühlwalze 28 begrenzt ist, in Rotationsrichtung R durch die Schmelze 38 begrenzt wird, nach oben hin durch die Breitschlitzdüse 26 und teilweise die Luftdüsenvorrichtung 32 begrenzt ist sowie entgegen der Rotationsrichtung R durch die Luftdüsenvorrichtung 32 begrenzt wird.

Der Zwischenraum 48 ist daher weitgehend von der Umgebung abgetrennt, sodass sich im Zwischenraum 48 andere Luftdruckverhältnisse ausbilden können, als in der Umgebung.

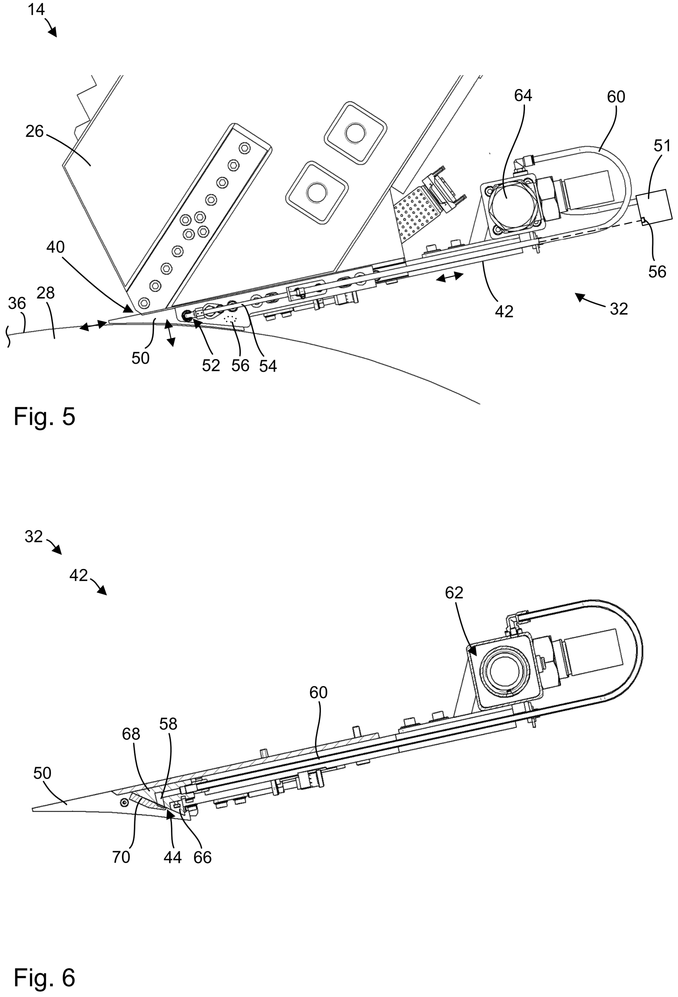

Auch der Zwischenraum 48 erstreckt sich in Axialrichtung und ist ununterbrochen in Axialrichtung. An den Stirnseiten in Axialrichtung kann der Zwischenraum 48 durch Abdeckungen 50 (Fig. 5) der Luftdüsenvorrichtung 32 verschlossen werden.

Die Breite des Zwischenraums 48 ist daher gleich oder größer als die Breite der Schmelze 38 und/oder der Austrittsöffnung 40.

Denkbar ist auch, dass die Breite des Zwischenraums 48 kleiner ist als die Breite der Schmelze 38 und/oder der Austrittsöffnung 40. Auch auf diese Weise kann der nötige Unterdruck erzeugt werden, wenn der Massenstrom der Luftdüsenvorrichtung 32 erhöht wird.

Während des Betriebs wird der Luftstrom 46 erzeugt. Der Luftstrom 46 ist entgegen der Rotationsrichtung R, d.h. aus dem Zwischenraum 48, heraus gerichtet und reißt daher Luft aus dem Zwischenraum 48 mit. Aufgrund des Bernoulli-Effekts entsteht somit ein Unterdruck im Zwischenraum 48.

Der Luftstrom 46 kann als weitere Begrenzung des Zwischenraums 48 angesehen werden.

Der Unterdruck, d.h. die Druckdifferenz zum Umgebungsdruck, kann zum Beispiel zwischen 500 Pa und 25.000 Pa sein, insbesondere zwischen 500 Pa und 20.000 Pa sein.

Dieser Unterdruck, beispielsweise in dieser Höhe, stellt sich insbesondere im Bereich unterhalb der Schmelze 38, d.h. zwischen Schmelze 38 und der Mantelfläche 36, ein, und/oder in einem Bereich des Zwischenraums 48 von der Nulllinie N in Rotationsrichtung R zur Schmelze 38. Beispielsweise stellt sich der Unterdruck von der Schmelze 38 bis hin zum Spalt 74 ein.

Aufgrund dieses Unterdrucks unterhalb der Schmelze 38 werden Lufteinschlüsse zwischen Schmelze 38 und der Kühlwalze 28 deutlich verringert.

Zudem verringert der Luftstrom 46 mögliche Lufteinschlüsse noch auf eine weitere Weise. Im Betrieb der Anlage 10 rotiert die Kühlwalze 28, wodurch entlang der Mantelfläche 36 Luft aus der Umgebung mitgerissen wird. Es bildet sich entlang der Mantelfläche 36 somit eine Grenzschicht aus Luft, die sich in Rotationsrichtung R bewegt.

Der Luftstrom 46 trifft entgegen der Rotationsrichtung R auf die Mantelfläche 36 auf, wodurch die Grenzschicht von der Mantelfläche 36 abgelöst wird und nicht in den Zwischenraum 48 und somit zwischen Schmelze 38 und Mantelfläche 36 gelangen kann. Im Betrieb der Anlage 10 wird als Verfahren zur Herstellung der Folie F, wie in Figur 4 vereinfacht gezeigt, die Schmelze 38 mittels der Breitschlitzdüse 26 erzeugt (S1) und auf der Kühlwalze 28 abgelegt (S2). Gleichzeitig wird ein Unterdruck im Zwischenraum 48 erzeugt (S3). Die auf der Kühlwalze 28 abgelegte Folie F wird anschließend direkt (S4), beispielsweise in der Längsreckanlage 16 und anschließend in der Querreckanlage 18, fertiggestellt.

In den Figuren 5 bis 8 ist ein Ausführungsbeispiel der Casting-Unit 14 in größerem Detailgrad dargestellt. Die im Zusammenhang mit diesen Figuren beschriebenen weiteren Merkmale und Vorteile der Casting-Unit 14 sind jedoch nicht auf diese Ausführungsform beschränkt, sondern lassen sich ebenfalls einzeln und ohne Weiteres auf andere Casting-Units 14, wie allgemein zu den Figuren zuvor beschrieben, übertragen.

Figur 5 zeigt eine Seitenansicht der Casting-Unit 14 im Bereich des Scheitelpunkts der Kühlwalze 28.

Die Luftdüsenvorrichtung 32 weist neben dem Düsenabschnitt 42 auch eine Abdeckung 50 auf, die stirnseitig den Zwischenraum 48 begrenzt und somit in der Darstellung der Figur 5 den Blick in den Zwischenraum 48 versperrt.

Zusätzlich zur Abdeckung 50 weist die Luftdüsenvorrichtung 32 eine Steuerung 51 auf, die beispielsweise, wie im gezeigten Ausführungsbeispiel, räumlich getrennt von der Breitschlitzdüse 26 vorgesehen ist.

Auf der axial entgegenliegenden Stirnseite ist der Zwischenraum 48 ebenfalls durch eine weitere dieser Abdeckungen 50 verschlossen.

Die Abdeckungen 50 sind unabhängig vom Düsenabschnitt 42 in Umfangsrichtung und in Radialrichtung bewegbar, wie durch die Pfeile an der Abdeckung 50 in Figur 5 illustriert.

Die Position der Abdeckungen 50 ist dabei so gewählt, dass sie in einem möglichst geringen Abstand zur Mantelfläche 36 positioniert sind. Denkbar ist auch, dass die Abdeckungen 50 mit der Mantelfläche 36 in Kontakt kommen.

Die Abdeckungen 50 liegen beispielsweise in Axialrichtung außerhalb des Bereichs, in dem die Schmelze 38 auf die Kühlwalze 28 aufgebracht wird.

Die Abdeckungen 50 haben eine Kontur, die der Kontur des Zwischenraums 48 entspricht, insbesondere bei maximaler Rotationsgeschwindigkeit v der Kühlwalze 28, oder eine Kontur, die größer als diese maximale Kontur ist.

Beispielsweise hat wenigstens eine der Abdeckungen 50 eine Messöffnung 52, die sich durch die Abdeckung 50 erstreckt. An der Außenseite ist ein Rohr 54 an der Abdeckung vorgesehen, das die Messöffnung 52 verschließt. Das andere Ende des Rohres 54 ist mit einem Drucksensor 56 der Steuerung 51 verbunden.

Das Rohr 54 ist in den Figuren nur teilweise dargestellt.

Auf diese Weise kann der Druck im Zwischenraum 48 durch die Steuerung 51 bestimmt werden.

Denkbar ist auch, dass anstelle des Rohres 54 ein Schlauch oder eine Kombination aus Rohr 54 und Schlauch zum Einsatz kommt.

Denkbar ist auch, dass der Drucksensor 56 direkt in der Messöffnung 52 oder an der Abdeckung 50 innerhalb des Zwischenraums 48 vorgesehen ist.

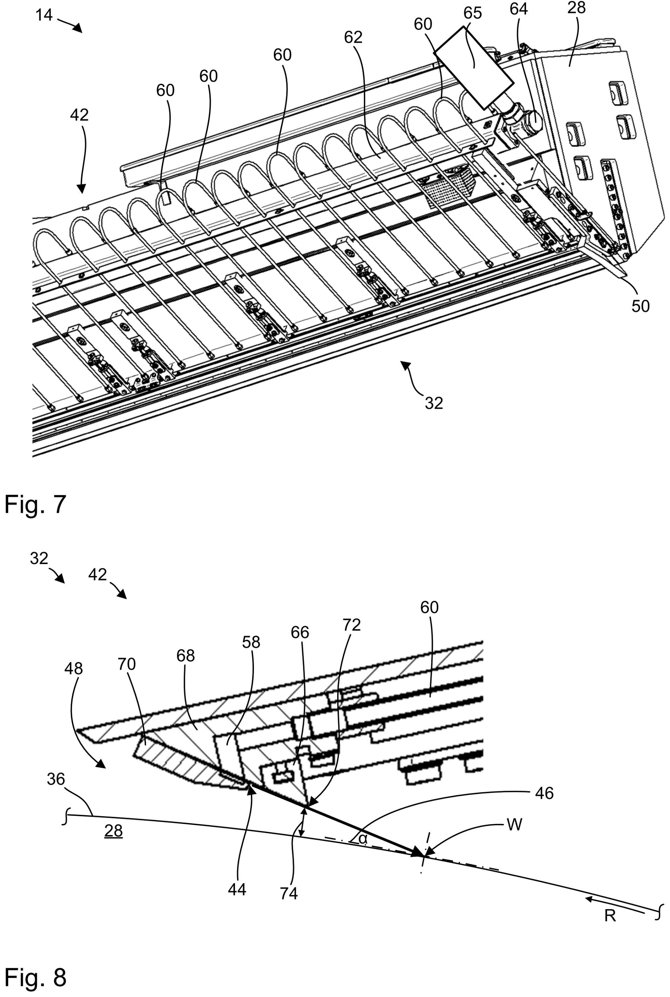

In Figur 6 ist die Luftdüsenvorrichtung 32, genauer gesagt der Düsenabschnitt 42 sowie die hintere der Abdeckungen 50 dargestellt. Der Düsenabschnitt 42 ist geschnitten dargestellt. Figur 7 zeigt die Luftdüsenvorrichtung 32, insbesondere den Düsenabschnitt 42 in einer Unteransicht.

Der Düsenabschnitt 42 weist, zusätzlich zur Düsenöffnung 44, einen Stauraum 58, mehrere Kanäle 60, eine Einlasskammer 62 sowie eine Druckluftquelle 64 auf. Die Einlasskammer 62 ist ein Hohlraum, der sich in Axialrichtung erstreckt, insbesondere in Axialrichtung ununterbrochen ist.

An einem oder beiden der stirnseitigen Enden der Einlasskammer 62 ist eine bzw. zwei Druckluftquellen 64 angeordnet, die im Betrieb Luft aus der Umgebung in die Einlasskammer 62 fördern und somit einen Überdruck in der Einlasskammer 62 erzeugen. Die Druckluftquelle(n) 64 sind beispielsweise durch die Steuerung 51 gesteuert.

Die Druckluftquelle 64 ist beispielsweise ein Rohr- und/oder Schlauch, der von einem Kompressor mit Druckluft gespeist wird. Das Rohr- und/oder der Schlauch kann Teil eines Rohr- und/oder Schlauchsystems sein. Der Kompressor kann sich in einem von der Anlage getrennten Raum befinden und durch die Steuerung 51 gesteuert sein.

Beispielsweise weist die Druckluftquelle 64 ein Druckregelventil 65 auf, das den Eingangsdruck p, d.h. den Druck der Luft, die der Einlasskammer 62 zugeführt wird, regelt.

Das Druckregelventil 65 ist mit der Steuerung 51 verbunden wird und durch die Steuerung 51 angesteuert.

An den stirnseitigen Enden der Einlasskammer 62 können zudem Luftfilter vorgesehen sein oder die Druckluftquellen 64 weisen Luftfilter auf, um zu verhindern, dass Festkörper in den Zwischenraum 48 gelangen, die die Qualität der Folie beeinträchtigen könnten.

Von der Einlasskammer 62 ausgehend erstrecken sich die Kanäle 60, beispielsweise in Form von Rohren oder Schläuchen, zum Stauraum 58.

Die Kanäle 60 sind in Axialrichtung in Abständen vorgesehen und entlang der gesamten Breite der Einlasskammer 62 angeordnet. Die Abstände sind überwiegend regelmäßig.

Beispielsweise weist die Luftdüsenvorrichtung 32 zwischen 15 und 25 der Kanäle 60 auf.

Die Kanäle 60 münden alle in den Stauraum 58.

Der Stauraum 58 ist ein Hohlraum, der sich in Axialrichtung erstreckt und in Axialrichtung zusammenhängend sein kann.

An den Stirnseiten ist der Stauraum 58 verschlossen.

Aus dem Stauraum 58 heraus mündet die Düsenöffnung 44. Der Stauraum 58 erstreckt sich über die gesamte Breite der Düsenöffnung 44, sodass der Stauraum 58 eine Breite hat, die breiter oder gleich breit wie der Luftstrom 46 und damit die Schmelze 38 ist.

Die Kanäle 60 münden in Axialrichtung in regelmäßigen Abständen in den Stauraum 58, um eine möglichst homogene Druckverteilung innerhalb des Stauraums 58 zu erreichen.

Die Düsenöffnung 44 ist beispielsweise, wie in Figur 8 zu sehen, als Schlitz ausgebildet, der die einzige Öffnung des Stauraums 58, abgesehen von den Kanälen 60, ist.

Beispielsweise, wie in der gezeigten Ausführungsform, ist die Düsenöffnung 44 als Schlitz zwischen einem ersten Bauteil 68 und einem zweiten Bauteil 70 des Düsenabschnitts 42 ausgebildet, wobei der Stauraum 58 in zumindest einem, insbesondere in beiden Bauteilen 68, 70 ausgebildet ist.

Entsprechend fluchtet die Düsenöffnung 44 mit der Oberfläche des ersten Bauteils 68.

In der Oberfläche dieses ersten Bauteils 68 ist der Strömungsleitabschnitt 66 ausgebildet.

Beispielsweise ist der Strömungsleitabschnitt 66 eine vom ersten Bauteil 68 separate Komponente, die an dem ersten Bauteil 68 befestigt ist. Der Strömungsleitabschnitt 66 kann aus PEEK hergestellt sein.

Zum Beispiel handelt es sich bei dem Strömungsleitabschnitt 66 um ein im Schnitt keilförmiges Bauteil mit einer Spitze zur Kühlwalze 28 hin.

Der Strömungsleitabschnitt 66 kann auch abgerundet und/oder konvex sein.

Ebenso ist es denkbar, dass der Strömungsleitabschnitt 66 einstückig mit dem ersten Bauteil 68 ausgebildet ist.

Der Strömungsleitabschnitt 66 hat eine Kante 72 in Axialrichtung, die durch die Spitze gebildet ist. Die Kante 72 ist beabstandet zur Mantelfläche 36 angeordnet, wobei die Kante 72 die Stelle des Düsenabschnitts 42 darstellt, die der Mantelfläche 36 der Kühlwalze 28 am nächsten kommt.

Der Abstand zwischen der Kante 72 und der Mantelfläche 36 stellt somit einen Spalt 74 zwischen der Kühlwalze 28 und der Luftdüsenvorrichtung 32 dar, der eine Öffnung des Zwischenraumes 48 zur Umgebung hin ist.

Der Spalt 74 hat beispielsweise eine Größe in Radialrichtung zwischen 0 mm und 6 mm, insbesondere zwischen 1,5 mm und 3,5 mm.

Der Strömungsleitabschnitt 66 und somit auch der Spalt 74 haben zumindest eine Breite in Axialrichtung, die der Breite der Düsenöffnung 44 entspricht.

Während des Betriebs der Luftdüsenvorrichtung 32 wird durch die Druckluftquelle 64 ein Überdruck in der Einlasskammer 62 erzeugt. Entsprechend baut sich aufgrund der fluidischen Verbindung durch die Kanäle 60 im Stauraum 58 ebenfalls ein Überdruck auf, wodurch der Luftstrom 46 aus der Düsenöffnung 44 heraus erzeugt wird.

Durch die Höhe des Überdrucks in der Einlasskammer 62 kann der Druck des Luftstroms 46 eingestellt werden.

Wie gut in Figur 8 zu sehen ist, verläuft der Luftstrom 46 entgegen der Rotationsrichtung R entlang des ersten Bauteils 68 und des Strömungsleitabschnitts 66. Der Luftstrom 46 verläuft dann durch den Spalt 74 und trifft anschließend an der Wirklinie W auf die Mantelfläche 36 der Kühlwalze 28.

Entsprechend liegt die Wirklinie W in Bezug auf die Rotationsrichtung R vor dem Spalt 74. Denkbar ist auch, dass die Wirklinie W hinter dem Spalt 74 oder innerhalb des Spalts 74 liegt.

Der Luftstrom 46 kann an der Wirklinie W und/oder im Spalt 74 Geschwindigkeiten zwischen 50 m/s und 250 m/s, insbesondere zwischen 50 m/s und 200 m/s, haben. Hierdurch können, wie bereits beschrieben, Unterdrücke im Zwischenraum 48 zwischen 5 Pa und 25.000 Pa erreicht werden, beispielsweise zwischen 500 Pa und 25.000 Pa, insbesondere zwischen 500 Pa und 20.000 Pa. Beispielsweise werden Unterdrücke zwischen 5 Pa und 600 Pa erzeugt, insbesondere zwischen 30 Pa und 150 Pa.

An der Wirklinie W trifft der Luftstrom 46 in einem Auftreffwinkel α zwischen 0° und 80°, insbesondere zwischen 5° und 40°, auf die Mantelfläche 36.

Unter dem Auftreffwinkel α wird dabei beispielsweise der Winkel zwischen dem Luftstrom 46 und der Tangente (strichpunktiert dargestellt) der Mantelfläche 36 an der Wirklinie W verstanden.

Der Auftreffwinkel α ist beispielsweise konstant entlang der Axialrichtung.

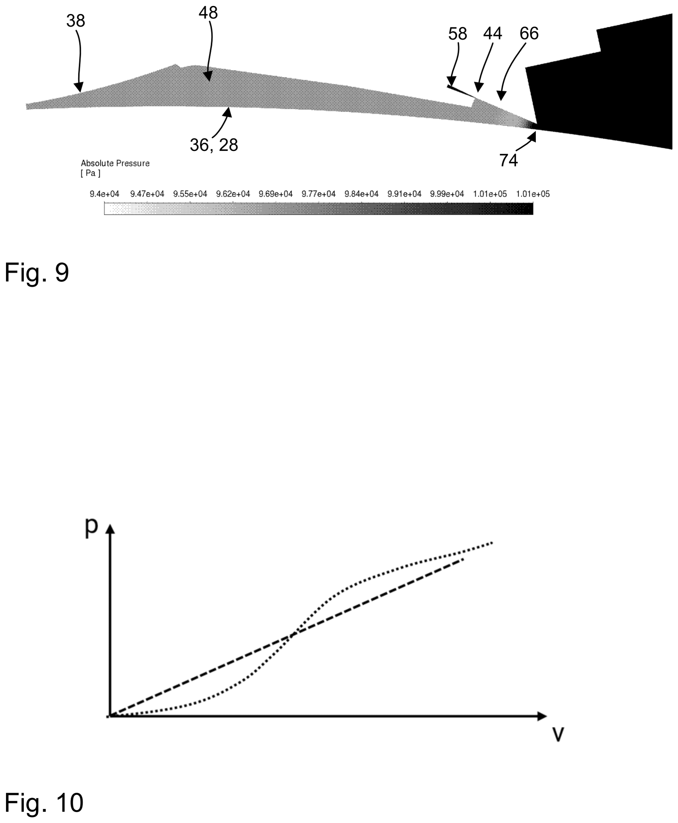

Figur 9 zeigt eine Darstellung der Höhe des Luftdrucks im Zwischenraum 48, in Teilen des Stauraums 58 und vor dem Spalt 74 in Schnittansicht während das Betriebs der Anlage 10. Die Komponenten der Casting-Unit 14 bzw. der Anlage 10 und die Schmelze 38 sind nicht gezeigt. Ihre Positionen sind aber zur besseren Orientierung mit den entsprechenden Bezugszeichen identifiziert.

Gut zu erkennen ist, dass der Luftdruck im Zwischenraum 48 deutlich niedriger ist als vor dem Spalt 74, sich also ein Unterdruck im Zwischenraum 48 ausbildet. Zudem ist der Unterdruck im Zwischenraum 48 überwiegend homogen.

Für eine automatische Regelung der Casting-Unit 14 kann die Steuerung 51 verwendet werden.

Die Steuerung 51 regelt das Druckregelventil 65, wodurch die Höhe des Überdrucks in der Einlasskammer 62 und damit der Druck des Luftstroms 46 eingestellt werden, der wiederum die Höhe der Unterdrucks im Zwischenraum 48 mitbestimmt.

Zum Beispiel erhält die Steuerung 51 als die einzige Eingangsgröße oder als eine der Eingangsgrößen die Geschwindigkeit v der Kühlwalze 28. Dies kann die Soll-Geschwindigkeit und/oder die Ist-Geschwindigkeit der Kühlwalze 28 sein.

Anhand der Geschwindigkeit v der Kühlwalze 28 ermittelt die Steuerung 51 ein Steuerungssignal für das Druckregelventil 65, das zum Beispiel einen Soll-Wert für den Eingangsdruck p und/oder den Unterdruck im Zwischenraum 48 angibt. Denkbar ist auch, dass das Steuerungssignal die Soll-Öffnungsweite des Druckregelventil 65 angibt.

Die Steuerung 51 gibt das Steuerungssignal an das Druckregelventil 65 aus, welches das Steuerungssignal empfängt und seine Öffnungsweite entsprechend dem Steuerungssignal einstellt.

Der aktuelle Wert des Eingangsdrucks p kann zum Beispiel mittels des Drucksensors 56 bestimmt werden und ebenfalls als Eingangsgröße für die Steuerung 51 dienen.

Beispielsweise ist in der Steuerung 51 eine Abhängigkeit des Soll-Werts des Eingangsdrucks p von der Geschwindigkeit v der Kühlwalze 28 hinterlegt. Diese Abhängigkeit kann als Look-Up-Tabelle und/oder als Funktion erfolgen.

Ein Beispiel einer solchen Look-Up-Tabelle ist im Folgenden wiedergegeben:

| Geschwindigkeit v der Kühlwalze 29 [m/min] | Unterdruck im Zwischenraum 48 [Pa] |
|---|---|
| 10 | 37 |
| 20 | 40 |
| 40 | 45 |
| 60 | 51 |
| 80 | 56 |
| 100 | 62 |
| 120 | 67 |
| 140 | 73 |
| 160 | 78 |
| 180 | 84 |

Figur 10 zeigt einen Graph mit zwei Beispielen einer solchen Funktion, die die Abhängigkeit des Soll-Wert des Eingangsdrucks p von der Geschwindigkeit v der Kühlwalze 28 zeigt. Die gestrichelte Linie zeigt eine lineare Abhängigkeit und die gepunktete Linie eine nicht-lineare Abhängigkeit, hier in Form einer S-Kurve.

Denkbar ist auch, dass der Soll-Wert des Eingangsdrucks p von mehr als einer Eingangsgröße abhängt. Denkbare Eingangsgrößen alleine oder in Kombination sind: Die Geschwindigkeit v der Kühlwalze 28, der Ausstoß an Folie F der Casting-Unit 14 und/oder der Anlage 10 zum Herstellen einer Folie F, die Dicke der Folie F, das Material der Folie F, und/oder die Temperatur der Folie F.

Denkbar ist ebenfalls, dass das Druckregelventil 65 ein manuelles Ventil ist und/oder manuell betätigbar ist. Der Eingangsdruck, die Höhe des Überdrucks in der Einlasskammer 62 und damit der Druck des Luftstroms 46, der wiederum die Höhe der Unterdrucks im Zwischenraum 48 mitbestimmt, kann damit auch manuell eingestellt werden. Durch eine manuelle Einstellung des Eingangsdruck kann auch eine Steuerung verzichtet werden.

## Patentansprüche

1. Casting-Unit für eine Anlage (10) zum Herstellen einer Folie (F), mit einer Breitschlitzdüse (26), einer Kühlwalze (28) und einer Luftdüsenvorrichtung (32),
wobei die Kühlwalze (28) eine Mantelfläche (36) aufweist und dazu ausgebildet ist, um eine Achse zu rotieren, sodass sich die Mantelfläche (36) in einer Rotationsrichtung (R) bewegt,
wobei die Breitschlitzdüse (26) dazu ausgebildet ist, eine Schmelze (38) zu erzeugen, die an einer Anlegelinie (A) auf die Mantelfläche (36) trifft,
wobei die Luftdüsenvorrichtung (32) mit der Breitschlitzdüse (26) verbunden ist, sodass durch die Mantelfläche (36) der Kühlwalze (28), die Schmelze (38), die Breitschlitzdüse (26) und die Luftdüsenvorrichtung (32) ein Zwischenraum (48) begrenzt ist, wobei die Luftdüsenvorrichtung (32) dazu ausgebildet ist, einen Luftstrom (46) zu erzeugen, der entgegen der Rotationsrichtung (R) entlang einer Wirklinie (W) auf die Mantelfläche (36) trifft und einen Unterdruck im Zwischenraum (48) erzeugt.

2. Casting-Unit nach Anspruch 1, **dadurch gekennzeichnet, dass** die Breitschlitzdüse (26) eine Austrittsöffnung (40) aufweist, die in Rotationsrichtung (R) und/oder in Radialrichtung zur Mantelfläche (36) hin geöffnet ist.

3. Casting-Unit nach Anspruch 1 oder 2, **dadurch gekennzeichnet, dass** die Austrittsöffnung (40) und/oder die Schmelze (38) eine Breite in Axialrichtung aufweist und die Breite des Zwischenraums (48), des Luftstroms (46) und/oder der Luftdüsenvorrichtung (32) in Axialrichtung kleiner, gleich oder größer als die Breite der Austrittsöffnung (40) und/oder der Schmelze (38) ist.

4. Casting-Unit nach einem der vorhergehenden Ansprüche, **dadurch gekennzeichnet, dass** die Austrittsöffnung (40), die Schmelze (38), der Zwischenraum (48) und/oder der Luftstrom (46) in Axialrichtung ununterbrochen sind.

5. Casting-Unit nach einem der vorhergehenden Ansprüche, **dadurch gekennzeichnet, dass** die Luftdüsenvorrichtung (32) einen Strömungsleitabschnitt (66) aufweist, der einen Spalt (74) zwischen der Kühlwalze (28) und der Luftdüsenvorrichtung (32) definiert, wobei der Luftstrom (46) durch den Spalt (74) verläuft, insbesondere wobei der Spalt (74) zwischen 0 mm und 6 mm, beispielsweise zwischen 1,5 mm und 3,5 mm, groß ist.

6. Casting-Unit nach einem der vorhergehenden Ansprüche, **dadurch gekennzeichnet, dass** der Luftstrom (46) an der Wirklinie (W) und/oder im Spalt (74) eine Geschwindigkeit zwischen 50 m/s und 250 m/s, insbesondere zwischen 50 m/s und 200 m/s, hat und/oder dass der Unterdruck im Zwischenraum (48) zwischen 5 Pa und 25.000 Pa ist, beispielsweise zwischen 5 Pa und 600 Pa, insbesondere zwischen 30 Pa und 150 Pa, ist oder zwischen 500 Pa und 25.000 Pa ist, insbesondere zwischen 500 Pa und 20.000 Pa ist.

7. Casting-Unit nach einem der vorhergehenden Ansprüche, **dadurch gekennzeichnet, dass** die Anlegelinie (A) in Rotationsrichtung (R) versetzt und/oder die Wirklinie (W) entgegen der Rotationsrichtung (R) versetzt zu einer Nulllinie (N) liegt, insbesondere wobei die Nulllinie (N) einer radial verlaufenden Gerade durch den Scheitelpunkt der Kühlwalze (28) in ordnungsgemäß montierter Position entspricht.

8. Casting-Unit nach einem der vorhergehenden Ansprüche, **dadurch gekennzeichnet, dass** der Luftstrom (46) in einem Auftreffwinkel (α) auf die Mantelfläche (36) trifft, wobei der Auftreffwinkel (α) zwischen 0° und 80°, insbesondere zwischen 5° und 40° ist.

9. Casting-Unit nach einem der vorhergehenden Ansprüche, **dadurch gekennzeichnet, dass** die Luftdüsenvorrichtung (32) an der Breitschlitzdüse (26) befestigt ist, insbesondere an der der Kühlwalze (28) zugewandten Seite der Breitschlitzdüse (26), und/oder dass die Luftdüsenvorrichtung (32) relativ zur Breitschlitzdüse (26) bewegbar ausgebildet ist.

10. Casting-Unit nach einem der vorhergehenden Ansprüche, **dadurch gekennzeichnet, dass** die Luftdüsenvorrichtung (32) einen Düsenabschnitt (42) mit einer Düsenöffnung (44) aufweist, die zur Wirklinie (W), zum Spalt (74) und/oder zum Strömungsleitabschnitt (66) hin geöffnet ist, insbesondere wobei die Luftdüsenvorrichtung (32) wenigstens eine Druckluftquelle (64) aufweist, die dazu ausgebildet ist, Luft zur Düsenöffnung (44) zu fördern, um den Luftstrom (46) zu erzeugen.

11. Casting-Unit nach Anspruch 10, **dadurch gekennzeichnet, dass** die Luftdüsenvorrichtung (32) einen Stauraum (58) aufweist, von dem aus sich die Düsenöffnung (44) erstreckt, insbesondere
wobei die Luftdüsenvorrichtung (32), insbesondere der Düsenabschnitt (42), eine Einlasskammer (62) und mehrere Kanäle (60) aufweist, wobei die Kanäle (60) die Einlasskammer (62) fluidisch mit dem Stauraum (58) verbinden, insbesondere wobei die wenigstens eine Druckluftquelle (64) an einer Stirnseite der Einlasskammer (62) angeordnet ist.

12. Casting-Unit nach einem der vorhergehenden Ansprüche, **dadurch gekennzeichnet, dass** die Casting-Unit (14) eine Steuerung (51) aufweist, und wobei die Luftdüsenvorrichtung (32) wenigstens eine Druckluftquelle (64) mit einem Druckregelventil (65) aufweist,
wobei die Steuerung (51) mit dem Druckregelventil (65) verbunden ist und dazu eingerichtet ist, das Druckregelventil (65) anzusteuern, insbesondere wobei die Steuerung (51) dazu eingerichtet ist, als Eingangsgröße die Geschwindigkeit (v) der Kühlwalze (28) zu empfangen und auf Basis wenigstens der Geschwindigkeit (v) der Kühlwalze (28) ein Steuerungssignal für das Druckregelventil (65) an das Druckregelventil (65) auszugeben.

13. Casting-Unit nach einem der vorhergehenden Ansprüche, **dadurch gekennzeichnet, dass** die Luftdüsenvorrichtung (32) zwei stirnseitige Abdeckungen (50) aufweist, die jeweils an einer der Stirnseiten des Zwischenraums (48) angeordnet sind und den Zwischenraum (48) in Axialrichtung verschließen, insbesondere wobei wenigstens eine der Abdeckungen (50) einen Drucksensor (56) und/oder eine Messöffnung (52) aufweist, die fluidisch mit einem Drucksensor (56) verbunden ist.

14. Anlage zum Herstellen einer Folie (F), mit einer Casting-Unit (14) nach einem der vorhergehenden Ansprüche und einer Reckanlage (16, 18), insbesondere einer Quer-, Längs- und/oder Simultan-Reckanlage.

15. Verfahren zum Herstellen einer Folie (F) mittels einer Anlage (10) gemäß Anspruch 14, wobei eine Schmelze (38) mittels der Breitschlitzdüse (26) erzeugt wird und auf der Kühlwalze (28) abgelegt wird, wobei gleichzeitig ein Unterdruck im Zwischenraum (48) erzeugt wird, insbesondere wobei die Höhe des Unterdrucks im Zwischenraum (48) durch eine Steuerung (51) der Casting-Unit (14) gesteuert oder geregelt wird, weiter besonders auf Basis wenigstens der Geschwindigkeit (v) der Kühlwalze (28).
